# EUROPEAN PATENT APPLICATION

(11) **EP 4 447 574 A1**
(43) Date of publication of application: **16.10.2024**
(21) Application number: 21966714.4
(22) Date of filing: 08.12.2021
(51) Int. Cl.: H04W 68/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2021/136590
(87) International publication number: WO 2023/102790

(57) **Abstract**

An information processing method. The information processing method includes: determining whether to monitor a paging message based on a paging early indication (PEI) within an anchor cell of a user equipment (UE).

## Description

### TECHNICAL FIELD

The disclosure relates to, but is not limited to, a field of wireless communication technology, in particular to an information processing method and apparatus, a communication device and a storage medium.

### BACKGROUND

After a terminal, also known as user equipment (UE), enters a radio resource control (RRC) unconnected state, if a network side device needs to send information to the UE, it may send a paging message to the UE to trigger the UE to switch from the RRC unconnected state to an RRC connected state.

In the related art, different UEs are configured to monitor paging messages at different paging occasions (POs). In order to further reduce power consumption of the UE monitoring a PO in the RRC inactive state, a Paging Early Indication (PEI) is introduced, so that the UE may temporarily monitor and decode the PEI to determine whether to monitor the PO or not. Monitoring and decoding the PO consumes less power than monitoring and decoding the PO, thereby saving the power consumption of UE.

However, it is worth noting that when the UE is in the RRC unconnected state, the cell reselection may occur as the UE moves. After the UE in the RRC unconnected state switches to another cell, whether the UE still needs to be paged according to the PEI is a problem that needs to be further solved.

### SUMMARY

Embodiments of the disclosure provide an information processing method, an information processing apparatus, a communication device and a storage medium.

According to a first aspect of the embodiments of the disclosure, an information processing method, performed by a user equipment (UE), is provided. The method includes:
determining whether the UE monitors a paging message based on a paging early indication (PEI) after a cell reselection.

According to a second aspect of the embodiments of the disclosure, an information processing method, performed by a core network device, is provided. The method includes:
sending notification information, in which the notification information indicates whether a user equipment (UE) monitors a paging message based on a paging early indication (PEI) after a cell reselection.

According to a third aspect of the embodiments of the disclosure, an information processing method, performed by a first base station, is provided. The method includes:
determining whether a user equipment (UE) monitors a paging message based on a paging early indication (PEI) after a cell reselection.

According to a fourth aspect of the embodiments of the disclosure, an information processing apparatus is provided. The apparatus includes:
a first determining module, configured to determine whether a user equipment (UE) monitors a paging message based on a paging early indication (PEI) after a cell reselection.

According to a fifth aspect of the embodiments of the disclosure, an information processing apparatus is provided. The apparatus includes:
a first sending module, configured to send notification information, in which the notification information indicates whether a user equipment (UE) monitors a paging message based on a paging early indication (PEI) after a cell reselection.

According to a sixth aspect of the embodiments of the disclosure, an information processing apparatus is provided. The apparatus is performed by a first base station. The apparatus includes:
a second determining module, configured to determine whether a user equipment (UE) monitors a paging message based on a paging early indication (PEI) after a cell reselection.

According to a seventh aspect of the embodiments of the disclosure, a communication device is provided. The communication device includes a processor, a transceiver, a memory, and executable programs stored on the memory and capable of being executed by the processor. When the executable programs are executed by the processor, the information processing method of the first aspect, the second aspect, or the third aspect described above is implemented.

According to an eighth aspect of the embodiments of the disclosure, a computer storage medium having executable programs stored thereon is provided. When the executable programs are executed by a processor, the information processing method of the first aspect, the second aspect, or the third aspect described above is implemented.

According to the technical solution provided by the embodiments of the disclosure, after the cell reselection, the UE may determine whether it needs to monitor a paging message according to a PEI. Compared with directly determining whether to monitor a paging message according to a PEI in accordance with original PEI configuration after the cell reselection without determining whether to monitor the paging message according to the PEI, the technical solution may at least reduce the situation where other UEs are unnecessarily waken up by the PEI sent by the network side for paging the UE after the cell reselection, thereby reducing the wake-up of other UEs due to the need of the other UEs to monitor the same PEI and PO as the UE after the cell reselection, as well as the power consumption generated by the wake-up.

It should be understood that the above general description and the following detailed descriptions are exemplary and explanatory only and do not limit embodiments of the disclosure.

### BRIEF DESCRIPTION OF THE DRAWINGS

The accompanying drawings, which are incorporated in and constitute a part of this specification, illustrate embodiments consistent with the disclosure and, together with the specification, serve to explain the principles of the embodiments of the disclosure.
FIG. 1 is a schematic diagram of a wireless communication system according to an embodiment.
FIG. 2 is a flowchart of an information processing method according to an embodiment.
FIG. 3A is a flowchart of an information processing method according to an embodiment.
FIG. 3B is a flowchart of an information processing method according to an embodiment.
FIG. 4 is a flowchart of an information processing method according to an embodiment.
FIG. 5 is a flowchart of an information processing method according to an embodiment.
FIG. 6 is a schematic diagram of a terminal controlling apparatus according to an embodiment.
FIG. 7 is a schematic diagram of an information processing apparatus according to an embodiment.
FIG. 8 is a schematic diagram of an information processing apparatus according to an embodiment.
FIG. 9 is a schematic diagram of a user equipment (UE) according to an embodiment.
FIG. 10 is a schematic diagram of a communication device according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

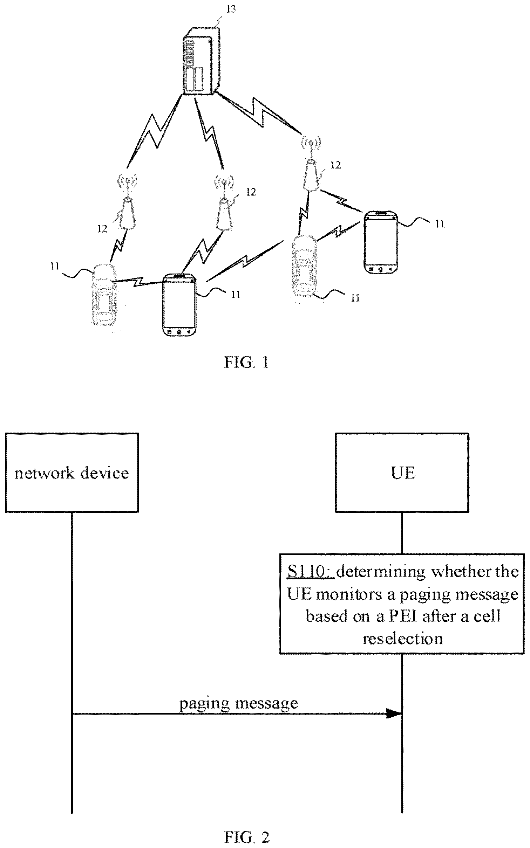

FIG. 1 is a schematic diagram of a wireless communication system according to an embodiment. As illustrated in FIG. 1, the wireless communication system is a communication system based on the cellular mobile communication technology. The wireless communication system may include: a plurality of user equipments (UEs) 11 and a plurality of access devices 12.

The UE 11 may be a device that provides voice and/or data connectivity to a user. The UE 11 may communicate with one or more core networks via a radio access network (RAN). The UE 11 may be an Internet of Things (IoT) UE, such as a sensor device, a mobile phone (or "cellular" phone), and a computer with an IoT UE. The UE 11 may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 11 may be an unmanned aerial vehicle device. Or, the UE 11 may be an in-vehicle device, for example, an electronic control unit (ECU) having a wireless communication function, or a wireless communication device external to the ECU. Or, the UE 11 can also be a roadside device, for example, a street light, a signal light, or other roadside devices having the wireless communication function.

The access device 12 may be a network side device in the wireless communication system. The wireless communication system may be the 4th Generation (4G) mobile communication system, also known as a long term evolution (LTE) system. Or, the wireless communication system may also be a 5G system, also known as a new radio (NR) system or a 5G NR system. Or, the wireless communication system may be any next generation system of the 5G system. The access network in the 5G system may be called a New Generation-RAN (NG-RAN). Or the wireless communication system may be a machine type communication (MTC) system.

The access device 12 can be an evolved access device (eNB) employed in the 4G system. Or, the access device 12 may be an access device (gNB) with a centralized distributed architecture employed in the 5G system. When the access device 12 adopts the centralized distributed architecture, it usually includes a central unit (CU) and at least two distributed units (DUs). The CU is equipped with a protocol stack of a packet data convergence protocol (PDCP) layer, a radio link control (RLC) layer, or a media access control (MAC) layer. The DU is equipped with a protocol stack of a physical (PHY) layer, and the specific implementation of the access device 12 is not limited in the embodiment of the disclosure.

A wireless connection can be established between the access device 12 and the UE 11 via a radio interface. In different implementations, the radio interface is a radio interface based on the 4G standard. Or, the radio interface is a radio interface based on the 5G standard, such as an NR. Or, the radio interface may also be a radio interface based on the standard of the next generation of 5G.

In some embodiments, an End to End (E2E) connections can also be established between the UEs 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of access devices 12 are connected to the network management device 13 respectively. The network management device 13 may be a core network device in the wireless communication system, for example, a mobility management entity (MME) in an evolved packet core (EPC). Or, the network management device may be other core network devices, such as a Serving GateWay (SGW), a Public Data Network GateWay (PGW), a Policy and Charging Rules Function (PCRF), or a Home Subscriber Server (HSS), etc. The implementation form of the network management device 13 is not limited in the embodiments of the disclosure.

FIG. 2 is a flowchart of an information processing method according to an embodiment. The method is performed by a UE. The method includes the following steps.

At step S110, it is determined whether the UE monitors a paging message based on a paging early indication (PEI) after a cell reselection.

The UE in a radio resource control (RRC) unconnected state may determine whether to monitor the paging message according to the PEI after the cell reselection. The RRC unconnected state includes: an RRC inactive state and/or an RRC idle state.

For example, the UE may determine, according to a protocol, that it monitors the paging message according to the PEI or not according to the PEI when it determines that it is a UE of specific type or a UE in a specific state. The UE of specific type of includes, but is not limited to, a UE with high mobility, and the UE in the specific state includes, but is not limited to, a UE in an extended discontinuous reception (eDRX) state or a power saving mode (PSM). Therefore, it is determined that the UE monitors the paging message according to the PEI or not according to the PEI.

The occurrence of the cell reselection of the UE indicates that the UE has moved to a certain extent. The UE may move to an area where a large number of UEs that need to monitor the same paging occasion (PO) as the UE or a large number of UEs that are located in the same paging group as the UE are located. If in this case, the UE still monitors the paging message according to the PEI, the network side needs to wake up the UE and other UEs that monitor the same PO as the UE through the PEI, which may wake up the other UEs by mistake and cause unnecessary power waste of the other UEs.

In this way, in the embodiment of the disclosure, instead of continuing to monitor the paging message according to the PEI in accordance with the configuration before the cell reselection, it is further determined whether the UE needs to monitor the paging message according to the PEI after the cell reselection, which may reduce false wake-up of other UEs.

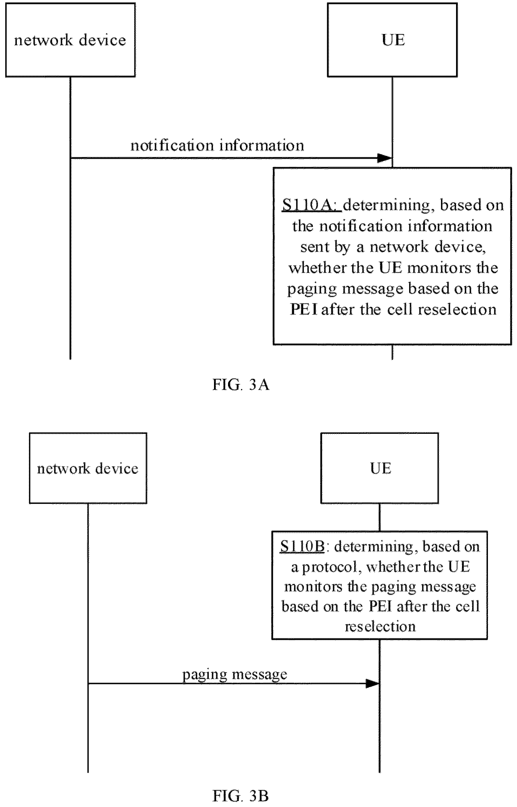

As illustrated in FIG. 3, the embodiment of the disclosure provides an information processing method. The method includes the following steps.

At step S110A, it is determined, based on notification information sent by a network device, whether the UE monitors a paging message based on a PEI after a cell reselection.

In the embodiment of the disclosure, the UE receives the notification information sent by the network device. The network device includes, but is not limited to: a core network device and/or an access network device.

For example, after reselecting from cell A to cell B, the UE may determine, in accordance with the notification information received from the core network or access network before or after reselecting to cell B, whether it monitors the paging message according to the PEI. In this way, the network side may make a comprehensive decision as to whether the UE monitors the paging message according to the PEI after the cell reselection, according to a number of UEs that monitor the same PO, and/or mobility and/or a paging probability of the UE to be paged, and in consideration with POs that need to be monitored by different UEs of two cells.

For example, the UE sends an attachment request to a network, and the network side sends an attachment response message to the UE based on the attachment request. The notification information may be carried in the attachment response message. In this way, during an attachment process or after completing an attachment process, the UE may know, according to the notification information sent by the network device, whether it needs to monitor the paging message according to the PEI after the cell reselection performed by the UE in an RRC unconnected state or at least in an RRC idle state.

As illustrated in FIG. 3B, the embodiment of the disclosure provides an information processing method. The method includes the following steps.

At step S110B, it is determined, based on a protocol, whether the UE monitors a paging message based on a PEI after a cell reselection.

In some embodiments, which UEs need to monitor the paging message according to the PEI after the cell reselection, and/or which UEs do not need to monitor the paging message according to the PEI after the cell reselection, may be written into a communication protocol in advance. In this way, both the UE and the network device know, according to agreements in the communication protocol, whether or not a corresponding UE needs to monitor the paging message according to the PEI after the cell reselection.

In an embodiment,

In an embodiment, the protocol agrees on a range of paging groups where the terminal may or may not use the PEI to monitor the paging message after the cell reselection. For example, UEs in a paging group 0 and/or UEs that are not assigned to a CN paging group do not use the PEI to monitor the paging message after the cell reselection.

In an embodiment, the protocol agrees on whether the terminal uses the PEI to monitor the paging message after the cell reselection depends on a type of paging group scheme. For example, a UE that has not been assigned with a paging group ID by the core network does not use the PEI to monitor the paging message after the cell reselection.

In some embodiments, the notification information sent by the network device includes:
a registration request completion message sent by a core network device and including the notification information.

For example, the UE sends a registration request to a network, and the network side sends a registration response message to the UE based on the registration request. The notification information may be carried in the registration response message. In this way, during a registration process or after completing a registration process, the UE may learn, according to the notification information sent by the network device, whether it needs to monitor the paging message according to the PEI after the cell reselection performed by the UE in an RRC unconnected state or at least in an RRC idle state.

In some embodiments, the notification information indicates at least one of the following information that:
the UE does not monitor the paging message according to the PEI after the cell reselection; or,
the UE monitors the paging message according to the PEI after the cell reselection.

The notification information may include one or more bits. These bits may explicitly indicate or implicitly indicate that a certain type of UE monitors the paging message according to the PEI after the cell reselection, or the UE does not monitor the paging message according to the PEI after the cell reselection.

After the UE sends a cell reselection, the base stations or the base station and the core network device learn that the UE has sent the cell reselection, and they may jointly determine, according to the protocol known to the UE or the notification information sent to the UE, whether a PEI need to be sent to the UE before paging the UE after the cell reselection of the UE.

In some embodiments, the notification information includes:
an indication flag bit, the indication flag bit indicating whether the UE monitors the paging message based on the PEI after the cell reselection.

In some embodiments, the notification information may include one or more bits. For example, the notification information may include one bit, and two bit values of the bit may be used to indicate whether the UE needs to monitor the paging message according to the PEI after the cell reselection. If the UE needs to monitor the paging message according to the PEI, the network device sends the PEI before paging the UE. The UE monitors the PEI first and then determines whether to monitor a PO according to a monitor result of the PEI, and determines whether it is paged by a network device based on whether or not the paging message received at the PO contains its corresponding paging identification.

In some embodiments, the notification information may include a range of paging groups.

For example, the notification information carries paging groups that do not monitor the paging message according to the PEI after the cell reselection. If the notification information indicates paging groups 0-3, it means that the network side allows UEs within the paging groups 0-3 to continue to use the PEI to monitor the paging message after the cell reselection.

For example, the notification information carries paging groups that monitor the paging message according to the PEI after the cell reselection. If the notification information indicates paging groups 4-7, it means that the network side instructs UEs within the paging groups 4-7 not to use the PEI to monitor the paging message after the cell reselection.

In some embodiments, the PEI includes:
a first type of PEI, in which the first type of PEI indicates whether the UE needs to monitor a corresponding PO; or,
a second type of PEI, in which the second type of PEI indicates whether the UE needs to monitor a PO based on a paging group.

The first type of PEI may be a general PEI. That is, this type of PEI is used for UEs that need to monitor one or more POs. Once these UEs monitor the PEI, they may determine whether they need to monitor the corresponding PO according to the PEI. The first type of PEI is a PEI that does not carry group information. The PEI can wake up all group users.

The first type of PEI may include only one bit, and different bit values of the bit may indicate that all UEs that need to monitor a certain PO may or may not need to monitor the corresponding PO.

The second type of PEI is a PEI for a paging group. UEs that need to monitor the same PO are classified into multiple paging groups. If the second type of PEI indicates whether or not the UE needs to monitor the corresponding PO, it may indicate the paging group s, so that the second type of PEI can accurately indicate the paging groups that need to monitor the PO. The paging group may be determined according to a paging probability and/or mobility of each UE. For example, UEs included in the same paging group have the same or similar paging probability and/or mobility. The second type of PEI may include a plurality of bits, in which one bit may indicate whether the UEs in at least one paging group need to monitor the corresponding PO. If UEs that need to monitor a PO are classified into N paging groups, the second type of PEI may include N bits, and the bit values of the N bits may be the same or different when the second type of PEI is sent. The specific bit value depends on whether the network side needs the UEs of the corresponding paging group to monitor the paging message at the corresponding PO.

In some embodiments, the method further includes:
in response to determining to monitor the paging message based on the PEI, monitoring the paging message based on a monitor result of the PEI; or,
in response to determining not to monitor the paging message based on the PEI, monitoring the paging message at a PO corresponding to the UE.

If the UE determines that it needs to monitor the paging message according to the PEI, the UE may first monitor the PEI according to PEI configuration, and then determine whether it needs to monitor the paging message at the corresponding PO according to the monitor result of the PEI.

If the UE determines that it does not need to monitor the paging message according to the PEI, the UE may directly monitor the paging message at the corresponding PO without monitoring the PEI. When the network device is paging the UE, it does not need to send a PEI specifically for waking up the UE to monitor the paging message, which reduces the need for sending the PEI to wake up other UEs that do not need to monitor the paging message, thereby reducing the power consumption of other UEs.

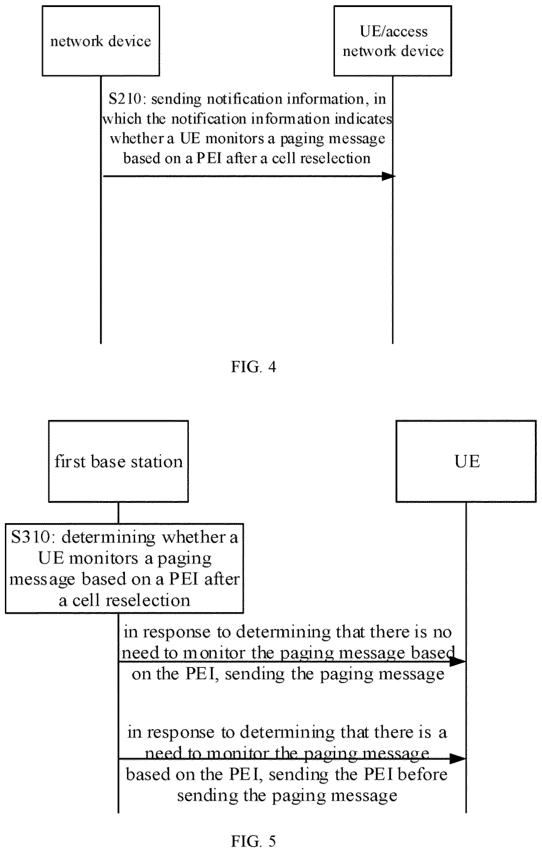

As illustrated in FIG. 4, the embodiment of the disclosure provides an information processing method, which is performed by a core network device. The method includes the following steps.

At step S210, notification information is sent, in which the notification information indicates whether a UE monitors a paging message based on a PEI after a cell reselection.

The information processing method may be applied to the core network device and performed by the core network device. The core network device includes, but is not limited to, an access management function (AMF).

The core network device may send the notification information to the UE to notify the UE in an RRC unconnected state whether it needs to monitor the paging message according to the PEI after the cell reselection of the UE. For example, it may at least notify the UE in an RRC idle state whether it needs to monitor the paging message according to the PEI after the cell reselection of the UE.

In some embodiments, the notification information indicates at least one of the following information that:
the UE does not monitor the paging message according to the PEI after the cell reselection; or,
the UE monitors the paging message according to the PEI after the cell reselection.

In some embodiments, the notification information includes:
an indication flag bit, the indication flag bit indicating whether the UE monitors the paging message based on the PEI after the cell reselection.

The indication flag bit may include one or more bits that are used to explicitly indicate whether the UE monitors the paging message according to the PEI after the cell reselection. In this way, the UE can easily know, according to the indication flag bit, whether it needs to monitor the paging message according to the PEI after the cell reselection.

In some embodiments, sending the notification information, includes:
sending the notification information to a UE; and/or,
sending the notification information to a base station.

When the core network device sends the notification information for a UE in an RRC unconnected state (referred to as an unconnected state), it may directly send the notification information to the UE to notify the UE whether it needs to monitor the paging message according to the PEI after the cell reselection occurs to itself. Meanwhile, the core network may also notify the base station whether it needs to page the UE according to the PEI when paging a certain UE. If it needs to page the UE according to the PEI, the base station may send the PEI before sending the paging message to the UE. If it does not need to page the UE according to the PEI, the base station may send the paging message for paging the UE directly without sending the PEI.

The core network device may send the notification information to the UE via any non-access stratum (NAS) message.

In some embodiments, sending the notification information to the UE, includes:
sending a registration request completion message including the notification information to the UE.

For example, when the UE registers to a network, it sends a registration request message to a core network device. If the core network device allows the UE to register to the network, it records information of the UE on the network side to complete registration of the UE on the network side, and sends a registration request completion message to the UE after the registration is completed. In the embodiment of the disclosure, the notification information is carried in the registration request completion message. In this way, after completing the network registration, the UE knows whether it needs to monitor the paging message according to the PEI after the cell reselection.

In some embodiments, sending the notification information to the base station, includes:
sending an Ng interface signaling including the notification information to the base station.

The core network device may send the notification information to the base station via any signaling. For example, any Ng interface signaling can be used to send the notification information to the base station.

For example, the Ng interface signaling includes:
a next generation (NG) setup response signaling; or,
a core network (CN) paging notification signaling; or,
an initial UE message notification signaling; or,
a UE context modification signaling; or,
a UE context setup signaling.

By carrying the notification information in the Ng interface signaling, a signaling that has other functions is multiplexed to send the notification information instead of using a dedicated signaling, so that the implementation is easy.

In some embodiments, the core network device may also inform the base station of the notification information via a signaling dedicated to send the notification information.

In some embodiments, the notification information is targeted at UEs of an entire cell, or a single UE.

For example, if the notification information is carried in a UE context modification signaling or a UE context setup signaling, the notification information is considered to be targeted at a single UE, i.e., per UE.

In conclusion, the core network device may send the notification information to the base station in various ways, and the specific implementation is not limited to any of the above.

As illustrated in FIG. 5, the embodiment of the disclosure provides an information processing method, which is performed by a first base station. The method includes the following steps.

At step S310, it is determined whether a UE monitors a paging message based on a PEI after a cell reselection.

The first base station may be an anchor base station or a non-anchor base station of the UE, and in any case the first base station is a base station that needs to page the UE.

For example, if the first base station is an anchor base station, and the UE has PEI configuration, the first base station may send the PEI before paging the UE, i.e., paging the UE according to the PEI. If the first base station is not an anchor base station, i.e., a non-anchor base station, it may determine whether to send the PEI before paging the UE according to a determination result on whether or not the UE monitors the paging message according to the PEI after the cell reselection.

As an embodiment, the first base station may be a base station that needs to page the UE due to receipt of a CN paging message from the core network, or a RAN paging message initiated by the base station for the UE in an inactive state.

As an embodiment, the anchor base station may be a base station from which the terminal has recently received an RRC connection release message, i.e., the last used gNB or the last visited gNB.

As an embodiment, the base station first determines whether a group is allowed to continue to use the PEI, if yes, there is no need to determine whether it is a base station reselected after the cell reselection, and it may send the PEI directly before paging the UE.

As an embodiment, the base station first determines whether the group is allowed to continue to use the PEI, if no, it needs to further determine whether it is a reselected base station. Only the base station that is not the base station reselected after the cell reselection needs to send the PEI before paging the UE, and the base station that is the base station reselected after cell reselection does not send the PEI before paging the UE.

If the UE needs to monitor the paging message according to the PEI after the cell reselection, a first cell needs to send the PEI before paging the UE, and then sends the paging message at a PO corresponding to the PEI, in which case there is no need to determine whether or not the first cell that needs to send the paging message is an anchor cell.

If the UE does not need to monitor the paging message according to the PEI after the cell reselection, it needs to determine whether the first cell is an anchor cell or not.

If the first cell is an anchor cell, the anchor cell sends the PEI first and then sends the paging message for paging the UE at a corresponding PO after sending the PEI.

If the first cell is not an anchor cell, when the first cell needs to page the UE, it may directly send the paging message for paging the UE at a PO to be monitored by the UE, and there is no need to send the PEI before sending the paging message.

In this case, it can be assumed that the PEI is used only in the anchor cell, and the PEI will no longer be used for monitoring the paging message after the UE moves out of the anchor cell.

As an embodiment, the first base station may be a base station that needs to page the UE due to receipt of a CN paging message from the core network or a RAN paging message initiated by the base station for the UE in an inactive state.

As an embodiment, the first cell is a cell under the first base station that may need to page the UE.

As an embodiment, the anchor cell is a cell of the terminal that has recently received an RRC connection release message, i.e., the last used cell or the last visited cell. As an embodiment, the first base station may obtain information about the anchor base station or anchor cell from the core network. For example, the first base station receives information from the core network to determine whether it is an anchor base station of the UE. As an embodiment, the first base station may save information of the anchor cell at the time of release of the UE from the UE release historical record. In this way, the first base station may know whether one or more cells formed by itself include an anchor cell of the UE.

In some embodiments, determining whether the UE monitors the paging message according to the PEI after the cell reselection, includes:
determining, according to notification information sent by a core network device, whether the UE monitors the paging message according to the PEI after the cell reselection; or,
determining, according to a protocol, whether the UE monitors the paging message according to the PEI after the cell reselection.

There are various ways for the first base station to specifically determine whether the UE needs to monitor the paging message according to the PEI after the cell reselection, and the specific implementation is not limited to any of the above.

In some embodiments, if the core network device determines whether the UE needs to monitor the paging message according to the PEI after the cell reselection according to the protocol, it may send the notification information to the base station and the UE, or it may not send the notification information to the UE. By default, the base station and the UE may determine by themselves, according to the protocol, whether the UE needs to monitor the paging message according to the PEI after the cell reselection.

In some embodiments, the notification information indicates at least one of the following information that:
the UE does not monitor the paging message according to the PEI after the cell reselection; or,
the UE monitors the paging message according to the PEI after the cell reselection.

If the notification information instructs some UEs to monitor the paging message according to the PEI after the cell reselection, other UEs that are not instructed may determine, based on whether the UE has previous configuration of monitoring the paging message according to the PEI before the cell reselection, whether to determine, in accordance with the previous configuration, if the paging message is monitored according to the PEI.

If the notification information instructs some UEs not to monitor the paging message according to the PEI after the cell reselection, other UEs that are not instructed may determine, based on whether the UE has previous configuration of monitoring the paging message according to the PEI before the cell reselection, whether to determine, according to the previous configuration, if the paging message is monitored according to the PEI.

In other embodiments, the core network device may separately indicate which UEs need to monitor the paging message according to the PEI after the cell reselection and also indicates which UEs do not need to monitor the paging message according to the PEI after the cell reselection.

In some embodiments, the notification information includes:
an indication flag bit, the indication flag bit indicating whether the UE monitors the paging message according to the PEI after the cell reselection.

The notification information may directly carry the indication flag bit for explicitly indicating whether the UE monitors the paging message according to the PEI after the cell reselection.

In some embodiments, determining whether the UE monitors the paging message according to the PEI after the cell reselection, includes at least one of the following:
in response to determining that the UE is allowed to monitor the paging message according to the PEI after the cell reselection, sending the PEI before sending the paging message for paging the UE;
in response to determining that the UE is not allowed to monitor the paging message according to the PEI after the cell reselection, determining, based on whether or not the first base station is an anchor base station of the UE, whether or not to send the PEI before sending the paging message for paging the UE; or,
in response to determining that the UE is not allowed to monitor the paging message according to the PEI after the cell reselection, determining, based on whether or not a first cell under the first base station is an anchor cell of the UE, whether or not to send the PEI before sending the paging message for paging the UE.

In response to determining that the UE is not allowed to monitor the paging message according to the PEI after the cell reselection, it is further determined whether or not to send the PEI before sending the paging message based on whether or not the current base station (i.e., the first base station) or the current cell (i.e., the first cell) is an anchor base station or an anchor cell of the UE.

The first cell may be any cell under the first base station, and "first" in the first cell has no specific reference but generally refers to any cell formed by the first base station.

The PEI may be the first type of PEI or the second type of PEI as previously described. For example, in response to determining that the UE is not allowed to monitor the paging message according to the PEI after the cell reselection, determining, based on whether or not the first base station is an anchor base station of the UE, whether or not to send the PEI before sending the paging message for paging the UE, includes:
in response to determining that the UE is not allowed to monitor the paging message according to the PEI after the cell reselection and the first base station is not an anchor base station of the UE, not sending the PEI before sending the paging message for paging the UE; or,
in response to determining that the UE is not allowed to monitor the paging message according to the PEI after the cell reselection and the first base station is an anchor base station of the UE, sending the PEI before sending the paging message for paging the UE.

In some embodiments, the method further includes:
in response to determining that the first base station is an anchor base station of the UE and the UE is allowed to monitor the paging message according to the PEI after the cell reselection, sending a paging message including PEI information and used for paging the UE in an inactive state to a second base station, in which the PEI information is used to instruct the second base station to page the UE in the inactive state according to the PEI; or,
in response to determining that the first base station is an anchor base station of the UE and the UE is not allowed to monitor the paging message according to the PEI after the cell reselection, sending a paging message including PEI information and used for paging the UE in an inactive state to a second base station.

As an embodiment, PEI-related information includes paging group information sent by the core network to the terminal, and a support capability of the terminal for the PEI.

If the first base station is an anchor base station of the UE, and the UE is allowed to monitor the paging message according to the PEI after the cell reselection, the first base station may send the paging message including the PEI information and used for paging the UE in the RRC inactive state (referred to as an inactive state) to a second base station in the same notification area (NA) as the first base station, otherwise, it may send the paging message not including the PEI information to the second base station.

In this way, a condition in which the paging message is sent to the second base station in order to page the UE, and the second base station wakes up other UEs by mistake due to the PEI when paging the UE according to the PEI, can be reduced.

The PEI information includes at least one of the following:
a PEI sending indication for indicating whether a second base station sends the PEI before paging the UE in the inactive state; and
paging group information for indicating a paging group of the UE in the inactive state.

In some embodiments, in response to determining that the UE is not allowed to monitor the paging message according to the PEI after the cell reselection, determining, based on whether or not the first cell is an anchor cell of the UE, whether or not to send the PEI before sending the paging message for paging the UE, includes:
in response to determining that the UE is not allowed to monitor the paging message according to the PEI after the cell reselection and the first cell is not an anchor cell of the UE, not sending the PEI before sending the paging message for paging the UE; or,
in response to determining that the UE is not allowed to monitor the paging message according to the PEI after the cell reselection and the first cell is an anchor cell of the UE, sending the PEI before sending the paging message for paging the UE.

If the first cell is an anchor cell of the UE, and the UE is allowed to monitor the paging message according to the PEI after the cell reselection, the first cell, as the anchor cell, may continue to send the paging message according to the PEI, i.e., send the PEI before sending the paging message for paging the UE according to previous configuration.

If the first cell is not an anchor cell of the UE, in order to reduce the phenomenon that the PEI is continued to be used to wake up other UEs after the cell reselection of the UE, when the first cell pages the UE, it does not send the PEI, but sends the paging message for paging the UE at a corresponding PO.

In this way, a cell-level definition as to whether the PEI is continued to be used to monitor the paging message after the cell reselection of the UE is realized.

In some embodiments, the PEI includes:
a first type of PEI, in which the first type of PEI indicates whether the UE needs to monitor a corresponding PO; or,
a second type of PEI, in which the second type of PEI indicates whether the UE needs to monitor a PO according to a paging group. The relevant descriptions of the first type of PEI and the second type of PEI herein can be found in the preceding embodiments and will not be repeated herein.

In long term evolution (LTE), the UE may not use the PEI after moving out of the original cell because the PEI may cause false wake-ups (also referred to as false alarms) of other users using the PEI.

The greater the mobility of the UE, the higher the probability of false alarms of other UEs occurs when monitoring a message based on the PEI after the cell reselection. It also leads to a problem that the inability of the UE to use the PEI may cause more power consumption. For LTE, it may not be a big problem, because the mobility of eMTC UEs or NB-Iot UEs is already small. However, in the NR phase, the UE has more mobility, and there may be problems if the original solution is still followed. The network notifies the UE whether to use the PEI for monitoring the paging message after the cell reselection.

As an embodiment, the PEI includes a PEI that carries a paging group function or a PEI that does not carry a paging group function.

The core network notifies the UE whether to use the PEI for monitoring the paging message after the cell reselection.

In Mode 1, the core network notifies the UE a range of paging groups where the PEI is used or not used to monitor the paging message after the cell reselection.

For example, for a first type of paging group, assuming that the first type of paging group includes paging groups 0-3, the UE may or may not be allowed to use the PEI for monitoring the paging message after the cell reselection. For example, the paging groups 0-3 may be paging groups with low paging probability, if UEs belonging to the paging groups 0-3 continue to use the PEI after reselecting to other cells, no many problems will be caused to false alarms of other UEs and power consumption of other UEs may be saved.

For example, for a second type of paging group, assuming that the second type of paging group includes paging groups 4-7, the UE may or may not be allowed to use the PEI for monitoring the paging message after the cell reselection. The paging groups 4-7 may include UEs with high paging probability, if UEs belonging to the paging groups 4-7 continue to use the PEI after reselecting to other cells, there may be problems about false alarms of other UEs, which will not facilitate saving power consumption of other UEs.

The second type of paging group has higher paging probability than the first type of paging group.

In Mode 2, the core network notifies the UE whether the current group to which the UE is grouped continues to use the PEI for monitoring the paging message after the cell reselection.

The core network notifies the UE whether the current group to which the UE is grouped may continue to use the PEI for monitoring the paging message after the cell reselection using a display flag bit.

Flag=0, indicating that the PEI is not used for monitoring the paging message after the cell reselection.

Flag=1, indicating that the PEI is continued to be used for monitoring the paging message after the cell reselection.

Flag is one of the aforementioned display flag bit.

The core network notifies the UE whether or not to use the PEI for monitoring the paging message after the cell reselection through a NAS process.

As an embodiment, the core network notifies the UE through a registration request completion message.

The core network notifies the user of the base station whether to use the PEI for monitoring the paging message after the cell reselection.

As an embodiment, negotiation may be performed between the base stations and the core network through a non-UE-associated signaling process. The non-UE-associated signaling may include, but is not limited to, an interface signaling between network elements. If an interface signaling between network elements is used to negotiate whether the UE monitors the paging message according to the PEI after the cell reselection, it may be for multiple UEs, e.g., for all UEs of a certain type or for all UEs in a certain paging group. There are various types of interface signaling between the network elements. For example, for the NR system, when the NG interface is established, the core network sends paging group assistance information to the base station via the NG SETUP RESPONSE.

As an embodiment, negotiation may be performed between the base stations and the core network through a UE-associated signaling process.

For example, in the NR system, for a UE in an idle state, the core network notifies the base station whether the UE in the idle state uses the PEI for monitoring the paging message after the cell reselection through CN paging.

For example, in the NR system, for a UE in an inactive state, the core network notifies the base station whether a user uses the PEI for monitoring the paging messages after the cell reselection through an initial UE message. The field indicating whether to monitor the paging message according to the PEI is carried in RRC inactive assistance info, which is subsequently used by the base station for RAN paging messages.

The base station decides, based on core network information, whether or not to send the PEI when the current base station initiates paging of the UE. The core network information includes, but is not limited to, the aforementioned core network information.

As an embodiment, the base station first determines, for the paging group, whether the UE is allowed to continue to use the PEI for monitoring the paging message after the cell reselection, if yes, the base station directly sends the PEI before paging the user without determining whether it is a reselected base station.

As an embodiment, the base station first determines for the group whether the PEI is allowed to be used continually, if no, it is necessary to determine whether the current base station is a reselected base station. Only the base station that is not a reselected base station sends the PEI before paging the UE. The reselected base station does not send the PEI before paging the UE.

Based on the core network information, the base station decides whether or not to send the PEI when paging of the UE is initiated in a cell under the current base station. The core network information includes, but is not limited to: the aforementioned core network information. The base station here is an anchor base station or a non-anchor base station.

As an embodiment, the base station first determines, for the paging group, whether the UE is allowed to continue to use the PEI for monitoring the paging message after the cell reselection, if yes, the base station sends the PEI directly before paging the user in the cell under the current base station without determining whether the cell under the current base station is a last used cell.

As an embodiment, the base station first determines whether the group is allowed to continually use the PEI, if no, it needs to determine whether the cell under the current base station is a reselected cell. Only for the cell that is not a reselected cell (i.e., last used cell), the PEI is sent before paging the UE. For the cell that is a reselected cell (which is not a last used cell), the PEI is not sent before paging the UE.

As an embodiment, for a UE in an inactive state, if the anchor base station determines to allow the UE to continue to use the PEI, it sends a RAN paging message including PEI information to the non-anchor base station, otherwise, the anchor base station sends a RAN paging message not including PEI information to the non-anchor base station.

The information on whether the core network and the UE/base station to use the PEI for monitoring the paging message after the cell reselection may be agreed upon based on an implementation protocol.

As an embodiment, the protocol agrees on a range of paging groups where the UE may or may not use the PEI for monitoring the paging message after the cell reselection, e.g., paging group 0.

As an embodiment, the protocol agrees on whether the UE uses the PEI for monitoring the paging message after the cell reselection depends on the type of grouping scheme. The user based on a UE-ID mode does not use the PEI for monitoring the paging message after the cell reselection, this type of UE generally makes emergency calls, and has high paging probability i.e., it may be paged at any time.

As an embodiment, the protocol agrees on whether the UE uses or not uses the PEI for monitoring the paging message after the cell reselection depends on a monitoring type of the paging message, e.g., a UE based on an e-DRX mode may use the PEI for monitoring the paging message after the cell reselection.

As an embodiment, the protocol agrees that whether or not the UE uses the PEI for monitoring the paging message after the cell reselection depends on a monitoring type of the PEI, e.g., the ungrouped PEI (the first type of PEI) may cause a huge amount of false wake-ups. Therefore, even if the UE is allowed to use the PEI for monitoring the paging message after the cell reselection, the selected base station or cell that sends the ungrouped PEI (i.e., the first type of PEI) will no longer use the PEI for monitoring the paging message.

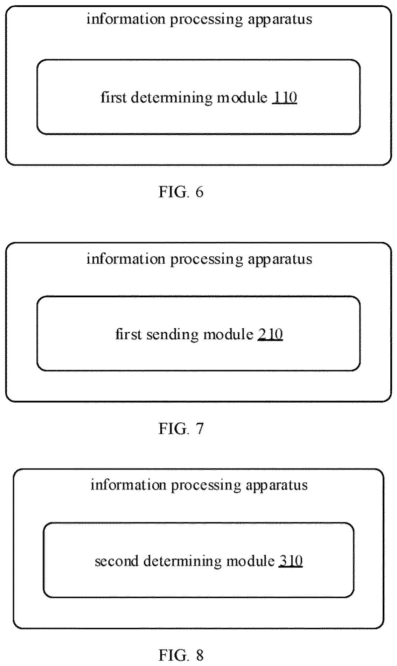

As illustrated in FIG. 6, the embodiment of the disclosure provides an information processing apparatus. The apparatus includes:
a first determining module 110, configured to determine whether a UE monitors a paging message based on a PEI after a cell reselection.

The information processing apparatus provided in the embodiment of the disclosure may be included in the UE.

In an embodiment, the first determining module 110 may be a program module. After the program module is executed by a processor, the program module can be used to determine whether the UE monitors the paging message based on the PEI after the cell reselection.

In an embodiment, the first determining module 110 may be a hardware and software combination module. The hardware and software combination module includes but is not limited to: various programmable arrays, such as field programmable arrays and/or complex programmable arrays.

In an embodiment, the first determining module 110 may be a pure hardware module. The pure hardware module includes but is not limited to: an application specific integrated circuit.

In an embodiment, the first determining module 110 is configured to: determine, based on notification information sent by a network device, whether the UE monitors the paging message based on the PEI after the cell reselection; or, determine, based on a protocol, whether the UE monitors the paging message based on the PEI after the cell reselection.

In an embodiment, the notification information sent by the network device includes:
a registration request completion message sent by a core network device and including the notification information.

In an embodiment, the notification information indicates at least one of the following information that:
the UE does not monitor the paging message according to the PEI after the cell reselection; or,
the UE monitors the paging message according to the PEI after the cell reselection.

In an embodiment, the notification information includes:
an indication flag bit, the indication flag bit indicating whether the UE monitors the paging message based on the PEI after the cell reselection; or,
first paging group information, the first paging group information indicating that the UE needs to monitor a paging group of the paging message based on the PEI after the cell reselection; or,
second paging group information, the second paging group information indicating that the UE does not need to monitor a paging group of the paging message based on the PEI after the cell reselection.

In an embodiment, the PEI includes:
a first type of PEI, in which the first type of PEI indicates whether the UE needs to monitor a corresponding paging occasion (PO); or,
a second type of PEI, in which the second type of PEI indicates whether the UE needs to monitor a PO based on a paging group.

In an embodiment, the apparatus further includes:
a monitoring module, configured to in response to determining to monitor the paging message based on the PEI, monitor the paging message based on a monitor result of the PEI; or, in response to determining not to monitor the paging message based on the PEI, monitor the paging message at a PO corresponding to the UE.

As illustrated in FIG. 7, the embodiment of the disclosure provides an information processing apparatus. The apparatus includes:
a first sending module 210, configured to send notification information, in which the notification information indicates whether a UE monitors a paging message based on a PEI after a cell reselection.

The information processing apparatus provided in the embodiment of the disclosure may be included in a core network device. The core network device includes, but is not limited to, an AMF.

In an embodiment, the first sending module 210 may be a program module. After the program module is executed by a processor, the program module can be used to determine whether the UE monitors the paging message based on the PEI after the cell reselection.

In an embodiment, the first sending module 210 may be a hardware and software combination module. The hardware and software combination module includes but is not limited to: various programmable arrays, such as field programmable arrays and/or complex programmable arrays.

In an embodiment, the first sending module 210 may be a pure hardware module. The pure hardware module includes but is not limited to: an application specific integrated circuit.

In an embodiment, the notification information indicates at least one of the following information that:
the UE does not monitor the paging message according to the PEI after the cell reselection; or,
the UE monitors the paging message according to the PEI after the cell reselection.

In an embodiment, the notification information includes:
an indication flag bit, the indication flag bit indicating whether the UE monitors the paging message based on the PEI after the cell reselection; or,
first paging group information, the first paging group information indicating that the UE needs to monitor the paging group of the paging message based on the PEI after the cell reselection; or,
second paging group information, the second paging group information indicating that the UE does not need to monitor the paging group of the paging message based on the PEI after the cell reselection.

In an embodiment, the first sending module 210 is configured to: send the notification information to a UE; and/or, send the notification information to a base station.

In an embodiment, the first sending module 210 is configured to: send a registration request completion message including the notification information to the UE.

In an embodiment, the first sending module 210 is configured to: send an Ng interface signaling including the notification information to the base station.

In an embodiment, the Ng interface signaling includes:
an NG setup response signaling; or,
a CN paging notification signaling; or,
an initial UE message notification signaling; or,
a UE context modification signaling; or,
a UE context setup signaling.

As illustrated in FIG. 8, the embodiment of the disclosure provides an information processing apparatus. The apparatus is applied in a first base station. The apparatus includes:
a second determining module 310, configured to determine whether a UE monitors a paging message based on a PEI after a cell reselection.

The information processing apparatus provided in the embodiment of the disclosure may be included in an access network device. The access network device includes, but is not limited to: an eNB or a gNB.

In an embodiment, the second determining module 310 may be a program module. After the program module is executed by a processor, the program module can be used to determine whether the UE monitors the paging message based on the PEI after the cell reselection.

In an embodiment, the second determining module 310 may be a hardware and software combination module. The hardware and software combination module includes but is not limited to: various programmable arrays, such as field programmable arrays and/or complex programmable arrays.

In an embodiment, the second determining module 310 may be a pure hardware module. The pure hardware module includes but is not limited to: an application specific integrated circuit.

In an embodiment, the second determining module 310 is configured to: determine, based on notification information sent by a network device, whether the UE monitors the paging message based on the PEI after the cell reselection; or, determine, based on a protocol, whether the UE monitors the paging message based on the PEI after the cell reselection.

In an embodiment, the notification information indicates at least one of the following information that:
the UE does not monitor a paging group of the paging message based on the PEI after the cell reselection; or,
the UE monitors a paging group of the paging message based on the PEI after the cell reselection.

In an embodiment, the notification information includes:
an indication flag bit, the indication flag bit indicating whether the UE monitors the paging message based on the PEI after the cell reselection.

In an embodiment, the second determining module 310 is configured to implement at least one of the following:
in response to determining that the UE is allowed to monitor the paging message based on the PEI after the cell reselection, sending the PEI before sending the paging message for paging the UE;
in response to determining that the UE is not allowed to monitor the paging message based on the PEI after the cell reselection, determining whether or not to send the PEI before sending the paging message for paging the UE based on whether or not the first base station is an anchor base station of the UE; or
in response to determining that the UE is not allowed to monitor the paging message based on the PEI after the cell reselection, determining whether or not to send the PEI before sending the paging message for paging the UE based on whether or not a first cell under the first base station is an anchor cell of the UE.

In an embodiment, the second determining module 310 is configured to: in response to determining that the UE is not allowed to monitor the paging message based on the PEI after the cell reselection and the first base station is not an anchor base station of the UE, not send the PEI before sending the paging message for paging the UE; or, in response to determining that the UE is not allowed to monitor the paging message based on the PEI after the cell reselection and the first base station is an anchor base station of the UE, send the PEI before sending the paging message for paging the UE.

In an embodiment, the second determining module is further configured to: in response to determining that the UE is not allowed to monitor the paging message based on the PEI after the cell reselection and the first cell is not an anchor cell of the UE, not send the PEI before sending the paging message for paging the UE; or,
in response to determining that the UE is not allowed to monitor the paging message based on the PEI after the cell reselection and the first cell is an anchor cell of the UE, send the PEI before sending the paging message for paging the UE.

In an embodiment, the apparatus further includes:
a second sending module, configured to: in response to determining that the UE is allowed to monitor the paging message based on the PEI after the cell reselection and the first base station is an anchor base station of the UE, send a paging message including PEI information and used for paging a UE in an inactive state to a second base station, in which the PEI information is used to instruct the second base station to page the UE in the inactive state according to the PEI; or, in response to determining that the UE is not allowed to monitor the paging message based on the PEI after the cell reselection and the first base station is an anchor base station of the UE, send a paging message used for paging a UE in an inactive state and not including PEI information to a second base station, send a paging message including PEI information and used for paging a UE in an inactive state to a second base station.

In an embodiment, the PEI includes:
a first type of PEI, in which the first type of PEI indicates whether the UE needs to monitor a corresponding PO; or,
a second type of PEI, in which the second type of PEI indicates whether the UE needs to monitor a PO based on a paging group.

Embodiments of the disclosure provide a communication device, including:
a memory for storing processor executable instructions;
a processor connected to the memory;
in which, the processor is configured to execute the information processing method provided by any of the foregoing technical solutions.

The processor may include various types of storage mediums. The storage mediums are non-transitory computer storage mediums capable of continuing to memorize information stored thereon after the communication device is powered down.

The communication device includes: an access device, a UE or a core network device.

The processor may be connected to the memory via a bus, etc., for reading executable programs stored on the memory, e.g., at least one of the methods shown in FIG. 2, FIGS. 3-5, FIGS. 6A-6D, FIGS. 7A-7B, and/or FIGS. 8A-8C.

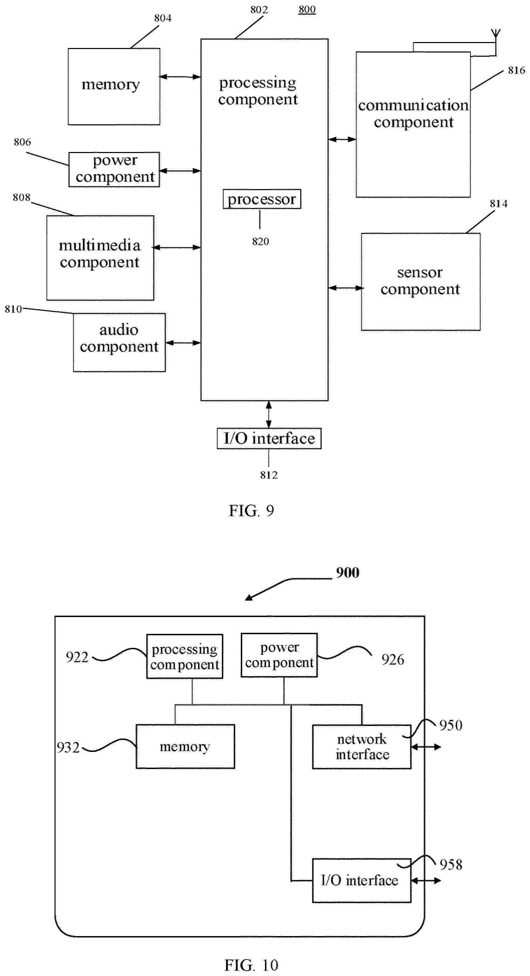

FIG. 9 is a block diagram of a UE 800 according to an embodiment. For example, the UE 800 may be a mobile phone, a computer, a digital broadcasting UE, a message transceiver device, a game console, a tablet device, a medical device, a fitness device and a personal digital assistant.

As illustrated in FIG. 9, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or a Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal from an external broadcast management system or broadcast associated information via a broadcast channel. In an embodiment, the communication component 816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In an embodiment, there is also provided a non-transitory computer readable storage medium including instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

As illustrated in FIG. 10, an embodiment of the disclosure illustrates an architecture of an access device. For example, a communication device 900 may be provided as a network side device. The communication device may be an access device and/or a core network device as previously described.

As illustrated in FIG. 10, the communication device 900 includes a processing component 922 consisting of one or more processors, and memory resources represented by a memory 932 for storing instructions that may be executed by the processing component 922, such as applications. The applications stored in the memory 932 may include one or more modules each corresponding to a set of instructions. In addition, the processing component 922 is configured to execute the instructions to perform any of the information processing methods described above that are performed by the core network device and/or the first base station, for example, the methods shown in FIG. 2, FIG. 3A to FIG. 3B, and FIG. 4 to FIG. 5.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An information processing method, performed by a user equipment (UE), comprising:
determining whether the UE monitors a paging message based on a paging early indication (PEI) after a cell reselection.

2. The method of claim 1, wherein determining whether the UE monitors the paging message based on the PEI after the cell reselection, comprises:
determining, based on notification information sent by a network device, whether the UE monitors the paging message based on the PEI after the cell reselection; or,
determining, based on a protocol, whether the UE monitors the paging message based on the PEI after the cell reselection.

3. The method of claim 2, wherein the notification information sent by the network device comprises:
a registration request completion message sent by a core network device and including the notification information.

4. The method of claim 2 or 3, wherein the notification information comprises:
an indication flag bit, wherein the indication flag bit indicates whether the UE monitors the paging message based on the PEI after the cell reselection; or,
first paging group information, wherein the first paging group information indicates that the UE needs to monitor a paging group of the paging message based on the PEI after the cell reselection; or,
second paging group information, wherein the second paging group information indicates that the UE does not need to monitor a paging group of the paging message based on the PEI after the cell reselection.

5. The method of any one of claims 1-4, wherein the PEI comprises:
a first type of PEI, wherein the first type of PEI indicates whether the UE needs to monitor a corresponding paging occasion (PO); or,
a second type of PEI, wherein the second type of PEI indicates whether the UE needs to monitor a PO based on a paging group.

6. The method of any one of claims 1-5, further comprising:
monitoring the paging message based on a monitor result of the PEI, in response to determining to monitor the paging message based on the PEI; or,
monitoring the paging message at a PO corresponding to the UE, in response to determining not to monitor the paging message based on the PEI.

7. An information processing method, performed by a core network device, comprising:
sending notification information, wherein the notification information indicates whether a user equipment (UE) monitors a paging message based on a paging early indication (PEI) after a cell reselection.

8. The method of claim 7, wherein the notification information comprises:
an indication flag bit, wherein the indication flag bit indicates whether the UE monitors the paging message based on the PEI after the cell reselection; or,
first paging group information, wherein the first paging group information indicates that the UE needs to monitor a paging group of the paging message based on the PEI after the cell reselection; or,
second paging group information, wherein the second paging group information indicates that the UE does not need to monitor a paging group of the paging message based on the PEI after the cell reselection.

9. The method of claim 7 or 8, wherein sending the notification information, comprises:
sending the notification information to the UE; and/or,
sending the notification information to a base station.

10. The method of claim 9, wherein sending the notification information to the UE, comprises:
sending a registration request completion message including the notification information to the UE.

11. The method of claim 9, wherein sending the notification information to the base station, comprises:
sending an Ng interface signaling including the notification information to the base station.

12. The method of claim 11, wherein the Ng interface signaling comprises:
a next generation (NG) setup response signaling; or,
a core network (CN) paging notification signaling; or,
an initial UE message notification signaling; or,
a UE context modification signaling; or,
a UE context setup signaling.

13. An information processing method, performed by a first base station, comprising:
determining whether a user equipment (UE) monitors a paging message based on a paging early indication (PEI) after a cell reselection.

14. The method of claim 13, wherein determining whether the UE monitors the paging message based on the PEI after the cell reselection, comprises:
determining, based on notification information sent by a network device, whether the UE monitors the paging message based on the PEI after the cell reselection; or,
determining, based on a protocol, whether the UE monitors the paging message based on the PEI after the cell reselection.

15. The method of claim 13 or 14, wherein the notification information comprises:
an indication flag bit, wherein the indication flag bit indicates whether the UE monitors the paging message based on the PEI after the cell reselection.

16. The method of any one of claims 13-15, wherein determining whether the UE monitors the paging message based on the PEI after the cell reselection, comprises at least one of the following:
sending the PEI before sending the paging message for paging the UE, in response to determining that the UE is allowed to monitor the paging message based on the PEI after the cell reselection;
determining, based on whether or not the first base station is an anchor base station of the UE, whether or not to send the PEI before sending the paging message for paging the UE, in response to determining that the UE is not allowed to monitor the paging message based on the PEI after cell reselection; or
determining, based on whether or not a first cell under the first base station is an anchor cell of the UE, whether or not to send the PEI before sending the paging message for paging the UE, in response to determining that the UE is not allowed to monitor the paging message based on the PEI after the cell reselection.

17. The method of claim 16, wherein determining, based on whether or not the first base station is an anchor base station of the UE, whether or not to send the PEI before sending the paging message for paging the UE, in response to determining that the UE is not allowed to monitor the paging message based on the PEI after cell reselection, comprises:
determining not to send the PEI before sending the paging message for paging the UE, in response to determining that the UE is not allowed to monitor the paging message based on the PEI after the cell reselection and the first base station is not an anchor base station of the UE; or,
sending the PEI before sending the paging message for paging the UE, in response to determining that the UE is not allowed to monitor the paging message based on the PEI after the cell reselection and the first base station is an anchor base station of the UE.

18. The method of claim 16, wherein determining, based on whether or not the first cell is an anchor cell of the UE, whether or not to send the PEI before sending the paging message for paging the UE, in response to determining that the UE is not allowed to monitor the paging message based on the PEI after the cell reselection, comprises:
determining not to send the PEI before sending the paging message for paging the UE, in response to determining that the UE is not allowed to monitor the paging message based on the PEI after the cell reselection and the first cell is not an anchor cell of the UE; or,
sending the PEI before sending the paging message for paging the UE, in response to determining that the UE is not allowed to monitor the paging message based on the PEI after the cell reselection and the first cell is an anchor cell of the UE.

19. The method of any one of claims 13 -18, further comprising:
sending a paging message that includes PEI information and is used for paging the UE in an inactive state to a second base station, in response to determining that the first base station is an anchor base station of the UE and the UE is allowed to monitor the paging message based on the PEI after the cell reselection, wherein the PEI information instructs the second base station to page the UE in the inactive state based on the PEI; or,
sending a paging message that does not include PEI information and is used for paging the UE in an inactive state to a second base station, in response to determining that the first base station is an anchor base station of the UE and the UE is not allowed to monitor the paging message based on the PEI after the cell reselection.

20. The method of any one of claims 13 -19, wherein the PEI comprises:
a first type of PEI, wherein the first type of PEI indicates whether the UE needs to monitor a corresponding paging occasion (PO); or,
a second type of PEI, wherein the second type of PEI indicates whether the UE needs to monitor a PO based on a paging group.

21. An information processing apparatus, comprising:
a first determining module, configured to determine whether the UE monitors a paging message based on a paging early indication (PEI) after a cell reselection.

22. The apparatus of claim 21, wherein the first determining module is configured to: determine, based on notification information sent by a network device, whether the UE monitors the paging message based on the PEI after the cell reselection; or, determine, based on a protocol, whether the UE monitors the paging message based on the PEI after the cell reselection.

23. The apparatus of claim 22, wherein the notification information sent by the network device comprises:
a registration request completion message sent by a core network device and including the notification information.

24. An information processing apparatus, comprising:
a first sending module, configured to send notification information, wherein the notification information indicates whether a user equipment (UE) monitors a paging message based on a paging early indication (PEI) after a cell reselection.

25. The apparatus of claim 24, wherein the first sending module is configured to: send the notification information to the UE; and/or, send the notification information to a base station.

26. An information processing apparatus, performed by a first base station, comprising:
a second determining module, configured to determine whether a user equipment (UE) monitors a paging message based on a paging early indication (PEI) after a cell reselection.

27. The apparatus of claim 26, wherein the second determining module is configured to perform at least one of the following:
sending the PEI before sending the paging message for paging the UE, in response to determining that the UE is allowed to monitor the paging message based on the PEI after the cell reselection;
determining, based on whether or not the first base station is an anchor base station of the UE, whether or not to send the PEI before sending the paging message for paging the UE, in response to determining that the UE is not allowed to monitor the paging message based on the PEI after cell reselection; or
determining, based on whether or not a first cell under the first base station is an anchor cell of the UE, whether or not to send the PEI before sending the paging message for paging the UE, in response to determining that the UE is not allowed to monitor the paging message based on the PEI after the cell reselection.

28. A communication device comprising a processor, a transceiver, a memory and executable programs stored on the memory and capable of being executed by the processor, wherein when the processor executes the executable programs, the processor is configured to perform the method of any one of claims 1-6, or claims 7-12, or claims 13-20.

29. A computer storage medium having executable programs stored thereon, wherein when the executable programs are executed by a processor, the processor is configured to perform the method of any one of claims 1-6, or claims 7-12, or claims 13-20.
